# EUROPEAN PATENT APPLICATION

(11) **EP 2 790 442 A1**
(43) Date of publication of application: **15.10.2014**
(21) Application number: 13305465.0
(22) Date of filing: 09.04.2013
(51) Int. Cl.: H04W 40/04, H04W 40/22

(54) **Control system, apparatus, methods, and computer readable storage medium storing instructions for a network node and/or a network controller**

(71) Applicant: ALCATEL LUCENT, 92100 Boulogne-Billancourt (FR)
(72) Inventor: Roessler, Horst, 70435 Stuttgart (DE); Milbrandt, Jens, 70435 Stuttgart (DE); Derakhshan, Fariborz, 90411 Nürnberg (DE)
(74) Representative: 2SPL Patentanwälte PartG mbB

(57) **Abstract**

Embodiments provide a control system, an apparatus, methods, and computer program products for a network node and a network controller. The control system (10) for a network entity (100) of a communication network (300) comprises a monitoring device (12), which is operable to determine information related to a resource availability associated with the network entity (100) and operable to communicate the information related to the resource availability to a network controller (200). The control system (10) further comprises a data relay device (14), which is operable to relay data packets between a plurality of network nodes, wherein the data relay device (14) is operable to receive information related to data packet relaying to the network entity (100) from the network controller (200). The network controller apparatus (20) comprises one or more communication interfaces (22), which are operable to receive information related to a resource availability from a monitoring device (12). The one or more communication interfaces (22) are further operable to communicate information related to data packet relaying to a data relay device (14). The network controller apparatus (20) comprises a routing module (24) operable to determine the information related to data packet relaying based on the information related to the resource availability. Embodiments are well-suited to distributed processing environments such as Software Defined Networks (SDN).

## Description

Embodiments of the present invention relate to communication networks, more particularly but not exclusively to routing in communication networks.

### Background

In conventional networks multiple options for the network architecture are conceivable. One approach is the so called Software-Defined Networking (SDN), which is an approach to network operation in which network control is decoupled from hardware, i.e. decoupled from packet forwarding devices such as routers, switches, etc., and wherein network control is given to a software application called SDN controller. Such a software application can be implemented in central manner, i.e. network control is carried out from a central software application. SDN may pave the way to more flexible networks which may adapt to changing demands more easily. In addition, SDN-based networks may benefit from simpler network management mechanisms due to centralization of control mechanisms.

When a packet arrives at a conventional switch, rules built into the proprietary firmware of the switch may determine where to forward the packet to. The switch may then send every packet going to the same destination along the same path and it may treat all the packets exactly the same way. In an enterprise environment smart switches designed with more sophisticated Application-Specific Integrated Circuits (ASICs) may recognize different types of packets and treat them differently. However, these switches may be rather tied to specific applications and be rather expensive.

An SDN switch may be considered as a simple and fast commoditized piece of hardware, i.e. a switch focused on the forwarding of data and relying on an SDN controller with respect to networking intelligence. When considering a packet arrival scenario an SDN packet switch may either have enough information to handle the incoming packets or it may ask the SDN controller on how to process this packet. In the former case, the switch may simply treat the packet in the known way. In the latter case, the switch may request and receive a new handling/forwarding rule from the SDN controller. This rule may be applied to the packet and remembered for later reviews. In an SDN network, a network operator may shape traffic from a centralized control console without modifying individual switches. The operator may change any forwarding rule of any network switch when necessary. Such rules allow, for example, for prioritizing, de-prioritizing or even blocking of specific types of packets with a very fine-granular level of control. This can be especially helpful in a cloud computing environment because it may allow an operator to manage traffic loads in a flexible and efficient manner. Essentially, this approach may enable the use of simple, less expensive SDN switches and an easier control over the traffic flows in the network.

### Summary

Embodiments are based on the finding that there is a desire to improve the communication in a centrally controlled environment with distributed generic resources, for example, in a network implementing a software-defined networking architecture. Such generic resources may, for example, correspond to processing resources, transmission resources, power resources, etc. It is a further finding that controlling and provisioning of generic resources and correspondingly required transport of resource information may provide advantages in such a network. Moreover, embodiments can be based on the finding that enabling the monitoring of generic resources may contribute to the realization of such network architecture. Embodiments may therewith provide mechanisms to provide resource availability information to a network controller, such as a centralized SDN controller.

Embodiments may therefore relate to communication in an at least partly centrally-controlled network environment with distributed generic resources such as processing resources, transmission resources, energy resources, etc. to which it is also referred to as resource availability information. In some embodiments, the envisaged network may implement a least parts of a SDN architecture. Embodiments can be based on the finding that availability information can be transported or provided to a network controller in order to control the network environment. Embodiments may therefore provide a concept for monitoring of generic resources in communication networks and embodiments may provide mechanisms to make the availability information, such as resource state information, available to a network controller. Embodiments may provide an efficient way using light-weight communication between a network controller and network nodes, such as generic network entities or network clients. The network clients may correspond to, for example, SDN clients. Generic network entities may correspond to packet switches, packet routers, optical switches, energy sensors, etc.

Some embodiments may further relate to a Cloud-based Radio Access Network (C-RAN) architecture. In such networks one function of the C-RAN architecture may be that of baseband processing, which can be implemented by a so called Multi-Site/Standard Baseband Unit (MSS-BBUs). While conventional RAN solutions may have the baseband processing located at a radio head site where the local processing resources can be specifically dimensioned according to the peak processing load assumed in each radio cell, the MSS-BBUs in a C-RAN may use real time cloud computing resources for a distributed processing of baseband information together with separated Remote Radio Heads (RRH) units that merely provide the necessary resource information. This architectural split of network functionality coordinated by a centralized controller may promise less power consumption and less cell sites. At the same time, it may allow for a more efficient use of processing resources and a more flexible service provisioning for network operators.

Embodiments may be further based on the finding that there is an operational gap in optical packet transport networks where it is found that leveraging of Internet Protocol (IP)/optical integration can be beneficial. Embodiments may provide advantages which can be based on integrated/inter-dependent operation of IP and underlying optical transport networks. For example, embodiments may provide an improvement to sub-optimal deployment and utilization of network resources, such as IP flows mapped on Traffic Engineering (TE) links, which are again mapped on optical lines/channels. Moreover, embodiments may enable a higher transport service introduction velocity and improve the situation with concurrent restoration schemes. Moreover, embodiments may improve the undesirable situation of parallel network management systems.

Embodiments may be used for multi-layer network information exchange, i.e. between IP and an optical layer, to let either layer know enough information of the other layer to improve the networks over all operational state. In embodiments the operational state may be considered improved when packet traffic is transported at lower processing effort, energy and/or cost.

Embodiments may provide a control system for a network entity of a communication network. In other words, the control system may be adapted to or operable in a network entity; it may be operated by or comprised in a network entity. In other embodiments the control system may control the network entity, i.e. it may as well be implemented at least partly outside the network entity. The control system may therefore also be referred to as network entity control system.

The network entity control system comprises a monitoring device, which is operable to determine information related to a resource availability associated with the network entity. The monitoring device is further operable to communicate the information related to the resource availability to a network controller. In embodiments the monitoring device may correspond to any means for monitoring, one or more modules, devices, or units. In some embodiments the monitoring device may be implemented in software, which is executed on an accordingly adapted hardware. Hence, the monitoring device may correspond to one or more processors, such as a Digital Signal Processor (DSP), an ASIC, etc., which executes software, which is operable to determine information related to resource availability associated with the network entity. The software can be further operable to communicate the information related to the resource availability to the network controller.

The control system further comprises a data relay device, which is operable to relay data packets between a plurality of network nodes. The data relay device is operable to receive information related to data packet relaying for the network entity from the network controller. In other words, the data relay device may correspond to any means for relaying, one or more data relay devices, units, or modules. For example, the data relay device may be implemented as a switch or a router. In some embodiments, the data relay device may also be implemented as software being executed on an accordingly adapted hardware. Hence, the data relay device may correspond to a processor or an ASIC, such as a DSP, on which accordingly adapted software is executed.

As it has already been mentioned above, the control system for the network entity may be active or operated in a communication network. The communication network may be any communication network, such as an IP-based network. In some embodiments the communication network may correspond to a mobile communication network. In some other embodiments the communication network may correspond to an optical transport network carrying IP and/or mobile data.

The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

According to the above, the control system can be operable to determine and communicate information related to a resource availability associated with the network entity to a network controller. In return, the data relay device is operable to receive information related to data packet relaying for the network entity from the network controller. Embodiments also provide an according apparatus for the network controller of the communication network. In other words, the apparatus may be adapted to or operable in a network controller; it may be operated or comprised in the network controller. The apparatus is therefore also referred to as network controller apparatus.

The network controller apparatus comprises one or more communication interfaces operable to communicate with the network entity. The one or more communication interfaces are operable to receive information related to the resource availability from a monitoring device and the one or more communication interfaces are further operable to communicate information related to data packet relaying to the network entity. In embodiments the one or more communication interfaces may correspond to one or more communication devices, one or more communication modules, or one or more communication units. In other words, the network controller apparatus is operable to communicate with the network entity and their monitoring device. In embodiments the communication interfaces may correspond to any interfaces or means for communicating which allow for communication of electrical or optical signals. For example, in some embodiments the one or more communication interfaces may correspond to the Common Public Radio Interface (CPRI).

The network controller apparatus further comprises a routing module operable to determine the information related to a data packet relaying based on the information related to the resource availability. In other words, the routing module can be implemented as one or more routing devices, one or more routing units, any means for routing etc. In some embodiments the routing module can be implemented as software being executed on accordingly adapted hardware. Hence, the routing module may correspond to a processor such as a DSP on which accordingly adapted software is executed. According to the above the network controller apparatus receives the information related to the resource availability from the above described monitoring device, and determines information related to data packet relaying based on the information related to the resource availability. The network controller apparatus further comprises the according interface to provide the information related to data packet relaying to the data relay device.

In other words embodiments provide a control system for a network entity, which determines availability information of resources for the network entity. Information on the resource availability is then provided to the network controller, which can determine data packet relaying information, such as routing information, which is then provided to a data relay device, which can be coupled directly or indirectly to the network entity. Hence a routing decision in the communication network can be based on the resource availability information at a certain network entity.

Embodiments may therewith provide a step towards a fully fletched network, such as a fully fletched SDN network. Embodiments may further foresee to provide information from the network domain to the application domain. Such information, as, for example, topology, resource, capability, availability, etc. information may be provided by the network controller and collected by accordingly adapted monitoring devices. Embodiments may therefore provide means to collect and to provide resource availability information.

In embodiments the data relay device may comprise a plurality of interface modules, interface devices, interface units, etc. The information related to data packet relaying may comprise information on a mutual assignment of at least a subset of the plurality of interfaces based on address information of the data packet. In other words, the data relay device may correspond to a switch, router or in general a device, which receives data packets and forwards data packets using multiple interface modules. The assignment, i.e. the mapping of receiving interfaces to transmitting interfaces, i.e. the ruling on how a data packet received on a certain receive interface is assigned to a certain transmit interface may be part of the information related to the data packet relaying. In some embodiments such information may correspond to a routing table. In other words, based on the resource availability information associated with the network entity the network controller may determine a routing table using the routing module and communicate the routing table to the data relay device. In other words the monitoring device may monitor certain resource availability associated with the network entity and communicate said availability information to the network controller, which determines a routing table, which is then provided to the data relay device to route certain data packets in the network directly or indirectly coupled with the respective network entity. The decision on whether a certain data packet is actually routed by the data relay device to the network entity may therefore depend on the resource availability associated with the network entity.

In some embodiments the monitoring device can be operable to use the Open Flow Protocol (OFP) or the HyperText Transfer Protocol (HTTP) to communicate with the network controller. Other embodiments may use other protocols, in general, any client/server protocol may be used, further examples are Representational State Transfer (REST), the Simple Object Access Protocol (SOAP), Remote Procedure Call (RPC), etc. Correspondingly, on the network controller apparatus side, the one or more communication interfaces may use the according client/server protocol, e.g. OFP, HTTP, REST, SOAP, RPC, to communicate with the monitoring device. That is to say that the monitoring device of the control system and the communication interface on the network controller apparatus side may use one of these protocols to communicate the resource availability information.

In some embodiments the OFP may cover the southbound part of an overall SDN architecture, i.e. the communication towards the network domain. OFP may therefore be an example of a feasible implementation aiming at the network domain in an example embodiment. OFP may therefore serve as a means for creating an SDN network and correspondingly the OFP specification may be used for client/server architecture. The corresponding OFP server may then correspond to the above network controller containing parts of the functionality of a fully fletched SDN controller. The client, as it may be implemented in the monitoring device, may correspond to a simple piece of software implementing at least the OFP. The OFP client may then be part of every OFP enabled network element, such as an open flow capable packet switch. In other words, the data relay device may also correspond to an OFP client. The OFP may then enable the communication between the client and server/controller. OFP technology can therefore be used in some embodiments implementing a corresponding communication network.

In embodiments the information related to the resource availability may correspond to one or more elements of the group of a utilization of processing units, an energy consumption, resource state information, a resource utilization, an energy availability, etc. In other words, the monitoring device may be implemented as a sensor sensing the according information. For example, the monitoring device may be implemented as a power sensor sensing the energy consumption of a certain processor. The energy consumption may relate to the processing load of the processor. Hence, in such an embodiment, the resource availability information may correspond to information on how much processing capacity the processor has left. In another embodiment the processing device may operate multiple processing units, such as CPUs. The availability information may then correspond to the number of CPUs, which are still available or which still have processing capacity available for processing. In another embodiment the resource availability information may correspond to the available processing capacity over all CPUs available. Such information on the processing capability can also be expressed as resource state information or resource utilization.

In other embodiments the resource availability information may correspond to energy availability information. For example, energy generation may depend on certain factors, such as the intensity of sunlight or solar conditions, wind conditions, current conditions, etc. In other words, depending on these conditions, energy may be available for a certain processing capacity or not. In such embodiments the monitoring device may correspond to an according heat, light, wind, current, etc. sensor. In such a network, routing decisions at the routing module of the network controller apparatus may therefore be determined based on the energy availability at certain processing capacities. In other words, a data packet may be routed to a router or a switch, where enough energy is available, for example, in terms of solar energy, wind energy, etc. Moreover, the monitoring device, as, for example, implemented as a sensor, may provide topology info, i.e. information how it is connected or coupled to the network. That may allow the network controller to manage or establish multiple alternative paths to the monitoring device, which may help in some embodiments to combat or react on network failures.

In embodiments the communication network may comprise an optical communication layer and an Internet Protocol (IP) layer. In other words, the physical layer of the communication network may correspond to any optical communication network using optical fiber transmission. On top of this layer there may be an IP layer. Hence, the resource availability information may take into account resource availability at a different node. For example, the control system may be implemented at a network switch or router. The monitoring device may then provide information on the availability of optical resources on the physical layer, such as how many carriers are available in an optical WDM system. Moreover, the availability information may comprise information on the processing resources at the respective router with respect to the IP routing capabilities. This availability information may relate to the available processing resources. In embodiments the availability information may comprise components of both, the optical resources and the IP resources. In some embodiments a prioritization may be carried out, i.e. availability of optical resources may be considered more important than the availability of IP resources or vice versa. In yet another embodiment, information on both resources may be monitored by the monitoring device and provided to the network controller. Additionally or alternatively, information on the more scarce resource may be provided.

In other words in some embodiments the communication network comprises an optical communication layer and an IP layer. The routing module at the network controller apparatus may be operable to determine the information related to the data packet relaying based on information related to the resource availability comprising IP traffic flow information and transport resource state information of the optical communication layer.

In further embodiments the monitoring device may be operable to receive information related to a measurement configuration from the network controller. In other words, the network controller may configure the monitoring device to measure certain quantities as resources. The information related to the measurement configuration may thus comprise information related to resource measurement to obtain the information related to the resource availability. Such measurement configuration may hence correspond to different quantities to be measured, such as temperature, number of processes, number of threads, power consumption, etc.

In some embodiments the information related to the measurement configuration may further comprise information related to a reporting cycle or reporting event in order to trigger a communication of the information related to the resource availability to the network controller. That is to say, the network controller apparatus may provide information with respect to a reporting cycle or a reporting event to the monitoring device. Such a reporting cycle can be adapted to the data rate or the data packet rate within the network. In some embodiments, the reporting cycle may correspond to 1ms or less, 10ms or less, 15ms or less, 100ms or less, 200ms or less, 500ms or less, 1s or less, etc.

Correspondingly the routing module at the network controller apparatus may be operable to further determine information related to the measurement configuration. The information related to the measurement configuration then comprises information related to a resource availability measurement to obtain the information related to the resource availability. Correspondingly the one or more communication interfaces can be operable to communicate the information related to the measurement configuration to the monitoring device. The one or more communication interfaces may be further operable to provide information related to the resource availability to parallel/complementary network control instances. That is to say the information related to the resource availability can be provided to other entities within a network's control plane, e.g. using a westbound Application Programming Interface (API) of the SDN controller. The westbound API may represent any interface towards other control plane entities. In some embodiments there can be a complementary network controller on another layer.

For example, the Internet Engineering Task Force (IETF) Working Group (WG) for Application-Layer Traffic Optimization (ALTO) may provide a protocol suite, in which such information received from the SDN controller can be provided to the application layer. For example, an application may, for a given choice of resources, select the best candidate based on several optimization criteria. ALTO may deal with resources for traffic transport and/or data processing, on an application level. The one or more communication interfaces may be further operable to provide information related to the resource availability directly to an application-layer entity. That is to say the information related to the resource availability can be provided to an application layer, e.g. using a northbound API of the network controller towards the application domain.

Accordingly, on the network controller apparatus side, the information related to the measurement configuration may further comprise information related to a reporting cycle or reporting event in order to trigger communication of the information related to the resource availability from the monitoring device to the network controller apparatus in line with the above. In further embodiments the routing module can be operable to determine information related to routing tables referring to a plurality of network entities based on information related to the resource availability from a plurality of monitoring devices. In other words, in embodiments the communication network may comprise a plurality of network nodes or network entities, which are monitored by accordingly adapted monitoring devices.

Hence, at the network controller apparatus availability information on a plurality of such network entities may be available. The one or more communication interfaces of the network controller apparatus may hence be operable to communicate the information related to routing tables to the plurality of network entities as information related to data packet relaying. The routing module can be operable to re-determine information related to routing tables if the information related to the resource availability of one or more of the plurality of monitoring devices indicates a resource availability violating or exceeding a defined/configured resource availability limit. In other words, the routing module can be operable to update the routing tables and routing information in the network, based on the resource availability in terms of generic resources, such as processing load, transmission load, or energy level, etc. at the respective network entities. Embodiments may therefore provide the advantage that the routing in the network can be made dependent on the resource availability at the respective network nodes, such as routers, switches, mobile cells, sensors, etc.

Embodiments further provide a method for a network entity of a communication network. The method comprises determining information related to resource availability and communicating the information related to the resource availability to a network controller. The communicating further comprises receiving information related to a data packet relaying from the network controller.

Embodiments further provide a method for a network controller of a communication network. The method comprises communicating with a network entity, wherein the communicating further comprises receiving information related to resource availability from a monitoring device. The communicating further comprises communicating information related to data packet relaying to the network entity. The method further comprises determining the information related to data packet relaying based on the information related to the resource availability.

Embodiments may further provide a computer readable storage medium storing instructions which, when executed by a computer, cause the computer to implement one of the methods described herein. Embodiments further provide a computer program or computer program product having a program code for performing one of the above described methods, when the computer program or computer program product is executed on a computer, processor or a programmable hardware.

Embodiments may provide the advantage that generic resource information such as resource availability information can be collected and transported to a network controller, for example, in an SDN environment by simple extension of commoditized SDN technology, for example, OFP. Embodiments may therewith enable resource availability triggered routing in such networks.

Embodiments of the present invention may enhance the control plane of a communication network. Embodiments may integrate at least a fraction of control plane functionality into a network controller, which is also provided with resource availability information. In embodiments the controller may then participate in the network's control plane, i.e. may participate in routing, signaling, and network management protocols such as Open Shortest Path First (OSPF), Resource Reservation Protocol (RSVP)-Traffic Engineering (TE), and the Simple Network Management Protocol (SNMP). Embodiments may therefore be in line with a basic SDN network. Embodiments may provide the advantage of centralized network control/management instead of participating in a complex distributed control plane environment. Hence, embodiments may be directly implemented with limited effort in client/server architecture of, for example, SDN. In embodiments SDN clients may be simply extended to perform generic resource monitoring and to transport the collected resource information to an SDN controller. To implement the latter, only minor extensions of the protocol used between SDN clients and controller may be necessary.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates an embodiment of a control system and an embodiment of a network controller;
Fig. 2 shows software defined network architectures in an embodiment;
Fig. 3 shows an SDN/OFP-controlled network with alternative implementations of generic resource monitoring clients in an embodiment;
Fig. 4 shows flow diagrams describing embodiments of open flow technology registration, configuration and resource monitoring/information exchange processes between clients and the network controller;
Fig. 5 illustrates a block diagram of a flow chart of an embodiment of a method for a network entity; and
Fig. 6 shows a block diagram of a flow chart of an embodiment of a method for a network controller.

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

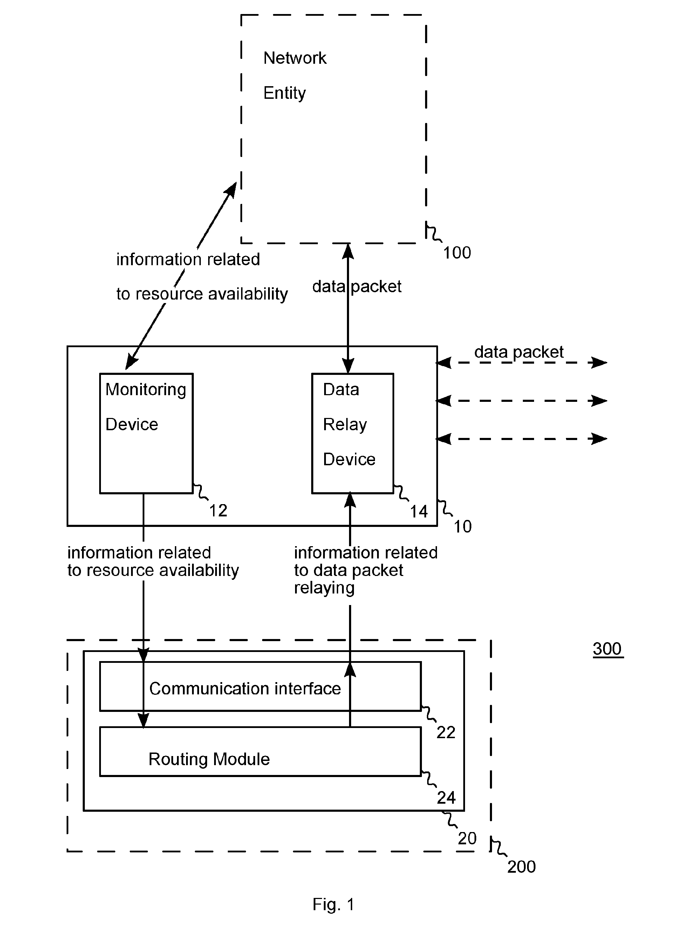

Optional components in the following figures are shown using dashed or dotted lines. Fig. 1 illustrates an embodiment of a control system 10 for a network entity 100 of a communication network 300. The control system 10 comprises a monitoring device 12 which is operable to determine information related to a resource availability associated with the network entity 100 and which is operable to communicate the information related to the resource availability to a network controller 200. The control system 10 further comprises a data relay device 14 which is operable to relay data packets between a plurality of network nodes. In Fig. 1 there is only one network node 100 depicted. The plurality of network nodes is indicated by the dotted arrows labeled "data packet" on the right hand side of the data relay device 14. The data relay device 14 is operable to receive information related to data packet relaying for the network entity 100 from the network controller 200. In other words, the data relay device 14 is in charge for routing, switching, forwarding or relaying data packets among a plurality of network entities one of which is the network entity 100 depicted in Fig. 1. Information on how this data relaying is done is communicated from the network controller 200 to the data relay device 14.

Fig. 1 also depicts an embodiment of an apparatus 20 for the network controller 200 of the communication network 300. The network controller apparatus 20 comprises one or more communication interfaces 22, which are operable to receive information related to the resource availability from the monitoring device 12. The one or more communication interfaces 22 are further operable to communicate the information related to the data packet relaying to the data relay device 14. As indicated in Fig. 1 the network controller apparatus 20 further comprises a routing module 24, which is coupled to the one or more communication interfaces 22, and which is operable to determine the information related to the data packet relaying based on the information related to the resource availability as provided by the monitoring device 12.

In the present embodiment it is further assumed that the data relay device 14 comprises a plurality of interface modules in order to communicate for the plurality of network nodes, among which, there is network entity 100. The information related to a data packet relaying comprises information on a mutual assignment of at least a subset of the plurality of interface modules based on address information of a data packet. That is to say that the network controller provides information on how a data packet should be relayed or routed to the data relaying device. For example, an IP data packet comprises source and destination addresses where the destination address can be used to determine an interface to which the packet should be routed in the data relay device 14. The mapping of such destination address and interface is provided by the network controller 20 in the present embodiment.

In the present embodiment it is further assumed that the monitoring device 12 is operable to use the open flow protocol. In other embodiments HTTP may be used. Generally, embodiments may use any client/server protocol, further examples of which are SOAP, REST, RPC, etc. Consequently the one or more communication interfaces 22 of the network controller apparatus 20 are operable to use open flow protocol to communicate with the monitoring device 12. In other embodiments the one or more communication interfaces 12 may be operable to use HTTP, REST, SOAP, RPC, etc. for this communication.

In the following it will be assumed that the network controller 200 corresponds to an open flow network controller 200. The open flow network controller 200 is assumed to be dedicated to a single network domain and it is assumed that it contains a Traffic Engineering Database (TED). In embodiments, a significant share of control plane functions of the network may be realized in the controller 200. This may enable the open flow controller 200 to manage network slices, i.e. discrete or virtual networks within a network cloud, or a whole network, respectively. For the communication between the open flow controller 200 and its clients, where the monitoring device 12 is assumed to be an open flow client 12, all open flow protocol messages, which are exchanged, can be formatted according to the open flow protocol specification. An OFP connection is usually encrypted using Transport Layer Security (TLS), but encryption may also be carried directly on top of a Transmission Control Protocol (TCP) connection in embodiments. OFP messages exchanged between switches, such as the data relay device 14, and the controller 200 can be used to notify the controller 200 of changes in the network topology and to manipulate flow tables, i.e. packet forwarding tables as information related to data packet relaying, of the open flow switches or routers 14.

A specific type of OFP message is a symmetric message. Messages of this type may be sent without solicitation in either direction, i.e. from controller 200 to switch 14 or vice versa. Within such a message type, there are experimental messages which may provide a standard way for open flow switches 14 to offer additional functionality within the open flow message type space. This can be considered as staging area for features meant for future open flow revisions, cf. open flow switch specification version 1.1.0. In embodiments, this type of message may be used together with further OFP messages to implement the according communication of information related to resource availability and/or information related to data packet relaying. These messages can, for example, be used to implement embodiments in a functional lab demonstrator showing the feasibility of generic resource monitoring in an enhanced SDN architecture.

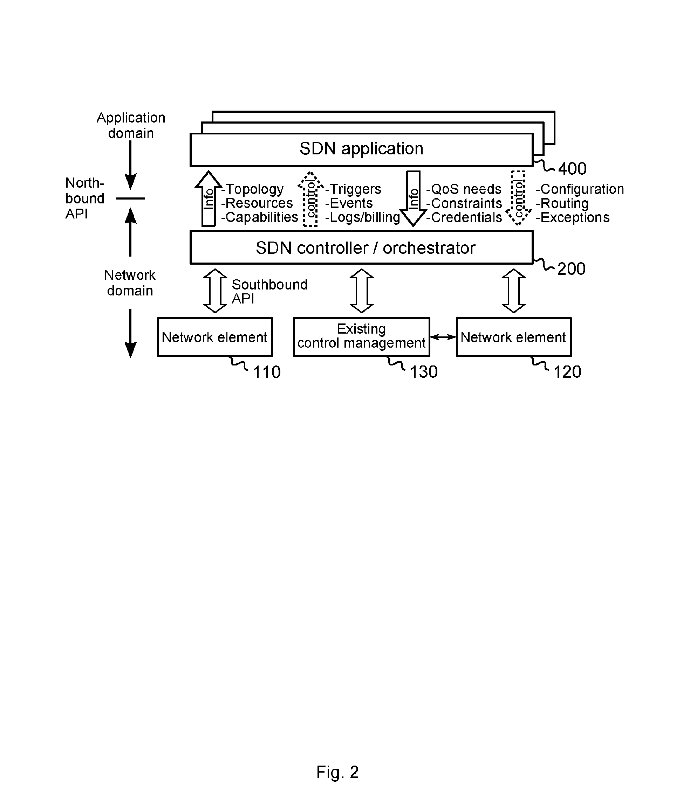

Fig. 2 illustrates SDN protocol architecture in an embodiment. Fig. 2 shows an SDN controller/orchestrator 200, which corresponds to an embodiment of the above described network controller 200. Within this architecture components shown in Fig. 2 below the network controller 200 refer to the network domain while components shown above the SDN controller 200 belong to the application domain. The according Application Protocol Interfaces (APIs) are referred to as northbound API when implemented towards the application domain and southbound API when implemented towards the network domain. In the network domain Fig. 2 shows multiple network elements 110 and 120, which may correspond to embodiments of the above described network entity 100. Fig. 2 further illustrates the existing control management 130, i.e. the control plane functions, for the network element 120. In the application domain Fig. 2 shows multiple SDN applications 400, e.g. Skype, BitTorrent, etc., which may receive information from the SDN controller 200, such as topology, resource or capability information. Moreover the SDN controller 200 may provide triggers, events, logs or billing information to the SDN applications 400. Furthermore, the SDN applications 400 may provide Quality of Service (QoS) needs, constraints, or information on credentials to the SDN controller 200. The SDN applications 400 may further provide control information, routing information or information on exceptions to the SDN controller 200.

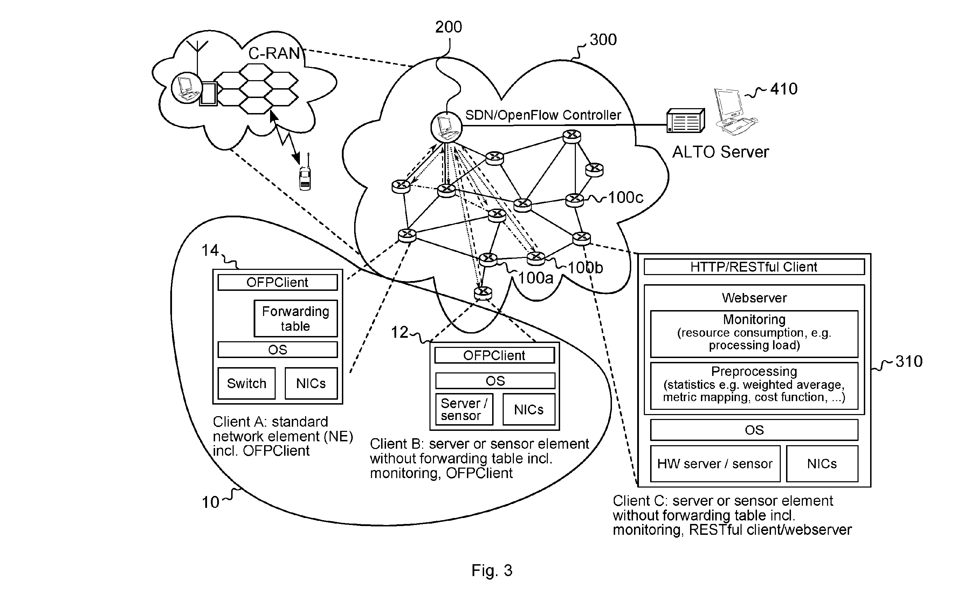

One protocol that may be used in the application domain is the so called Application-Layer Traffic Optimization (ALTO). ALTO may consider the rendezvous problem on the application layer, i.e. to select an optimized resource from a given set of resources. Such selections may, for example, occur in many domains such as Peer-to-Peer (P2P) networks, Content Delivery Networks (CDN), network routing and distance calculation, data sensor and cloud computing. In embodiments, any of these domains may be considered. In these domains, ALTO may provide a corresponding application with information to perform better-than-random peer selection. A typical ALTO use case can be the reduction of cross-domain traffic in P2P networks where the resource of choice can be the peer selected for content exchange. Though ALTO deals with traffic transport resources and/or data processing resources as well, it can be seen as complementary or additional in embodiments. In other words in some embodiments resource availability information may be provided to an application layer or the application domain 400. In such an embodiment the one or more communication interfaces 22 of the network controller apparatus 20 can be operable to provide information related to resource availability to an application entity 400 or an ALTO server 410, as shown in Fig. 3.

ALTO may not specify any provision protocol. For example, Request For Comments (RFC) 5693 states that such a provisional protocol carrying resource information between a source of information and an ALTO server is out the scope of the ALTO architecture. Merely an ALTO protocol for communication between an ALTO client, which usually corresponds to an application, and an ALTO server may be part of standardization, cf. draft-ietf alto-protocol-13. Moreover, ALTO may exclude the provisioning of resource information that changes very rapidly, since it is considered as an out-of-band technique. Therefore, for example, baseband processing may not be in the scope of an ALTO approach. Embodiments may therefore represent a way to make such resource availability information available to an ALTO server to support it in application-oriented routing decisions on a time scale, which is better adapted to the process variations and data packet rates in the underlying network. Such a time scale may, for example, be on a reporting cycle of 1ms or less, 10ms or less, 15ms or less, 100ms or less, 200ms or less, 500ms or less, 1s or less, etc.

Embodiments may make use of other underlying protocols for network element access. For example, embodiments may make use of the Simple Network Management Protocol (SNMP), which is a standard protocol for managing IP network devices such as routers, switches, servers, etc. Embodiments may use this protocol in network management systems implemented, for example, in an SNMP manager that may communicate with SNMP agents implemented on the network-attached devices using the SNMP protocol. SNMP managers may directly query an addressed network element and ask the corresponding SNMP client to provide a specific piece of its local information that is stored in one of many different Management Information Bases (MIBs). Embodiments may provide information to the SNMP manager using SNMP traps which are defined per and triggered by SNMP clients, when, for example, network elements/resource conditions require administrative attention.

In embodiments the SNMP architecture may thus rely on management data in the form of variables on the managed system, which may describe the configuration of the system. These data can be stored in the MIBs as pairs of parameter and value. The parameters can then either be queried directly or their changing values may trigger an SNMP trap if defined. In either case, the SNMP concept can be considered rather static and may be improved by embodiments using provision and consideration of the resource availability information. Embodiments may further improve the SNMP concept by an automatic registration process of the respective clients, i.e. data monitoring devices 12 and relaying devices 14, at the respective server and the possibility of resource information preprocessing, which will be further detailed subsequently.

Embodiments may further make use of the Transaction Language 1 (TL1), which is a widely deployed standard protocol predominantly used to manage equipment of optical network infrastructure. As will be further detailed subsequently, embodiments may make use of optical networks. TL1 messages may be exchanged between Network Operating/Management Systems (NOS/NMS) and Network Elements (NEs) and they may allow for administration and surveillance of the latter by the former. The TL1 language defines four types of messages each following a fixed structure. These kinds of messages are an input message, for example, configuration comments, sent by the NOS/NMS to an NE. Another type of message is an output/response message sent by an NE in response to an input message. Moreover, there are acknowledgement messages sent by an NE if the output/response message is delayed by more than two seconds. Furthermore, there are also autonomous messages sent by the NE as an asynchronous message usually triggered in case of special events or alarms.

Even though the TL1 message set is extensible thus allowing for network control commands, it may be just as static as SNMP and it may be improved or extended by embodiments. Embodiments may make use of other protocols for network element access and information exchange between distributed network agents and centralized network controllers and may extend these protocols in similar way. Among these protocols there may be a Common Object Request Broker Architecture (CORBA), Representational State Transfer (REST), the Simple Object Access Protocol (SOAP), etc.

In the following an embodiment will be described which is implemented as part of the southbound API of the SDN architecture shown in Fig. 2. In the embodiment SDN clients comprise the monitoring device 12 to enable the monitoring of generic resources and using a light-weight SDN protocol, i.e. the protocol for communication between an SDN client, such as the monitoring device 12, and the SDN server/controller 200. State or availability information on such generic resources is transported from a generic SDN-enabled client machine to the respective network controller 200. In the following example embodiment the monitoring device 12 and the data relay device 14 can be implemented as SDN-enabled client machines as well as all kinds of network-attached entities such as packet and optical switches, servers, smart sensors, baseband processors, cloud computing resources, etc. The embodiments of the client machines can automatically register themselves at the local SDN controller 200.

In other words, the monitoring device 12 or the data relay device 14 can be operable to provide registration information to the network controller 200, in order to be registered. Along with the registration information the monitoring device 12 and/or the data relay device 14 may provide topology information to the network controller 200, such that the network controller 200 is enabled to determine alternative paths to the respective components in case of failures in the network. Moreover, embodiments may use dedicated SDN protocol messages to implement the associated communication processes for registration, configuration, and resource information exchange of the availability information. The resource information, i.e. the information related to the resource availability, can be collected and preprocessed by the clients and either be proactively sent to the SDN controller 200 or queried by the latter.

The information related to the resource availability may correspond to one or more elements of the group of a utilization of processing units, an energy consumption, resource state information, a resource utilization or an energy availability. As it has already been mentioned above, an according measurement configuration may be provided by the network controller 200. That is to say the monitoring device 12 is operable to receive information related to a measurement configuration from the network controller 200. The information related to the measurement configuration comprises information related to a resource measurement to obtain the information related to the resource availability. Hence, the information related to the measurement configuration may specify the quantity which is to be measured, such as temperature, heat, light intensity, processing capacity, etc. Moreover, the information related to the measurement configuration may further comprise information related to a reporting cycle or a reporting event in order to trigger a communication of the information related to the resource availability to the network controller 200.

On the network controller apparatus 20 side the routing module 24 is operable to further determine information related to the measurement configuration. The information related to the measurement configuration then comprises information related to the resource availability measurement to obtain the information related to the resource availability. Consequently, the one or more communication interfaces 22 are operable to communicate the information related to the measurement configuration to the monitoring device 12. In line with the above the information related to the measurement configuration may then further comprise information determined by the routing module 24 on a reporting cycle or reporting event in order to trigger communication of the information related to the resource availability from the monitoring device 12 to the apparatus 20.

In some embodiments the monitoring device 12 can further be operable to generalize or unify measurement results. In other words, the clients comprising the monitoring device 12 can be further operable to map the locally measured resource metric to a common network metric, such as a universal metric, and thus provide additional constraints to multi-criteria, as, for example, resource-oriented, routing decisions made directly in the SDN controller 200. For example, such a universal or common network metric may correspond to a score which is determined at the monitoring device. For example, coming back to the above mentioned example of measuring the available wind or solar energy, the score may be higher the more energy is available. In other embodiments the score may be higher the more processing capacities are available. Considering a farm of a plurality of processors being available at such a network entity 100, the score may correspond to the number of available processors vs. the number of already occupied processors, etc. In some embodiments, the information on the resource availability may be relayed via the northbound SDN API to an instance of the application domain to better support application-oriented routing decisions made by applications, as it has already been mentioned above with respect to ALTO.

Embodiments may therefore provide a seamless integration in SDN-controlled network environments with automatic registration and direct configuration process. Embodiments may provide a flexible, light-weight exchange of generic resource information between SDN controller 200 and clients 12, 14 with optional data preprocessing. For example, embodiments may provide a mapping of a local resource metric to a common network metric, such as the universal metric. Embodiments may therewith provide an enhancement of the SDN architecture extending it with an implementation of the monitoring of generic resources. The collected resource state/availability information may either be used by the SDN controller 200 itself or it may be offered to arbitrary instances of the application domain 400 via the northbound APIs of the SDN architecture as shown in Fig. 2.

In other words embodiments may be implemented as part of the southbound API of the SDN architecture as shown in Fig. 2. For example, the existing OFP protocol may be extended to enable the monitoring of generic processing resources or general resources and the transport of availability information on such resources from generic open flow-enabled client machines, i.e. all kinds of network attached entities, to the SDN/open flow controller. Moreover, open flow experimental messages may be used to realize the associated communication process. The resource information collected can provide additional constraints to multi-criteria, for example resource-oriented, routing decisions made directly in the SDN controller 200 or it can be relayed via the northbound SDN API to an instance of the application domain 200 to better support application-oriented routing decisions made by applications.

Fig. 3 illustrates an embodiment in an SDN architecture using the open flow protocol. Fig. 3 illustrates a communication network 300 which is assumed to be implemented as a cloud-RAN, as indicated in the top left illustration of the network. Within the network, there is the SDN/open flow controller 200, which is directly or indirectly coupled to a plurality of network entities. Among the plurality of network entities shown in Fig. 3 some are exemplified as routers or switches 100a, 100b and 100c. Moreover, in line with Fig. 2, Fig. 3 shows an ALTO server 410, which is coupled to the SDN controller 200. Fig. 3 further illustrates a data relay device 14, which is implemented as an OFP client. The data relay device 14 has a forwarding table which controls a switching functionality. The Operating System (OS) of the data relaying device 14 assures that received data packets are forwarded to respective interfaces or interface modules as given in the forwarding table and in the Network Interface Card (NIC) which is comprised in the data relaying device 14.

Fig. 3 further shows a monitoring device 12, which is also implemented as an OFP client with an Operating System operating a respective server or a sensor application and a network information center. The data relaying device 14 can be implemented as a standard network element including the OFP client. The data monitoring device 12 can be implemented as a server or sensor element without a forwarding table but including monitoring. Both together, the monitoring device 12 and the data relay device 14 form a control system 10, for example, for the network entity 100a. For example, the data monitoring device 12 may monitor the temperature or processing capacity of network entity 100a and provide the corresponding information to the SDN open flow controller 200. The SDN controller 200 may then provide based on that capacity information on the forwarding table to the data relaying device 14, such that data packets are routed by the data relaying device 14 based on the resource availability information provided by the monitoring device 12.

Fig. 3 further shows another HTTP/RESTful client 310. This client is implemented as a web server comprising monitoring means such as the monitoring device 12, for monitoring its resource consumption as, for example, the processing load. Moreover, it is assumed that the web server comprises means for preprocessing, i.e. to derive statistics as for example a weighted average, a metric mapping, a cost function, etc. As shown in Fig. 3 the client 310 comprises an operating system and respective hardware servers/sensors and an according NIC. In other words the client 310 may monitor the resources consumed or available at the web server and provide that information to the SDN controller 200. Depending on the resource availability the SDN controller 200 may control a flow table, for example, in switch 100c.

As illustrated in Fig. 3 there are different implementations of embodiments. Some of these implementations are in accordance with the networking scenario depicted in Fig. 3, which illustrates the C-RAN problem of processing load distribution. The SDN-like architecture of open flow can be used in embodiments to realize extended open flow clients to monitor the states of resources like the loads of the processing units, as, for example, servers, media gate ways, etc., in the C-RAN, their energy consumption or other relevant resource statistics. The collected information may then be preprocessed and transported to the open flow controller 200 using the open flow protocol. In Fig. 3 the data relaying device 14 is implemented as a standard open flow network element as an OFP client comprising the protocols Link Layer Discovery Protocol (LLDP) and OFP. The other clients 12 and 310 are different realizations for non-standard network elements. The data monitoring device 12 is implemented as a server or sensor element using the standard OFP client and components for measurement and statistics preprocessing. The OFP is used to register and configure the new element and conveys the monitored resource data information to the controller 200. In further embodiments the open flow implementations of clients 14 and 12 can be easily replaced by alternative technologies. For instance, embodiment 310 can be a server or sensor element using a RESTful interface based on a web server containing the components for a measurement and statistics preprocessing. This client 310 may then use the HTTP protocol to register and configure the new element and to convey the monitored resource data to the controller 200.

In the embodiment after transportation to the open flow controller 200, the resource information can be further processed in different ways, i.e. it may be fed to a multi criteria routing algorithm within the open flow controller 200. Additionally or alternatively it may be relayed to an ALTO server or directly to an instance of the application domain for application-oriented routing that takes the current processing load situation within the C-RAN into account.

In embodiments an SDN-enabled network element as described above may correspond to any device, such as for example a switch, a server, a processor, a sensor, etc., which may also run the LLDP) for communication with neighbored network elements and a Client-Server Protocol (CSP, as for example OFP, REST/HTTP, etc.) for communication with the SDN controller 200. In addition, the client implemented in a network element may be capable of monitoring local resources. In embodiments an SDN enabled network element can be integrated into an already existing SDN-controlled network environment. For example, the LLDP discovery process may identify the available entities and also the characteristics, i.e. the basic properties of each network element, such as their identification code, their operating context, their processing capabilities, etc., which may be retrieved by a discovery process.

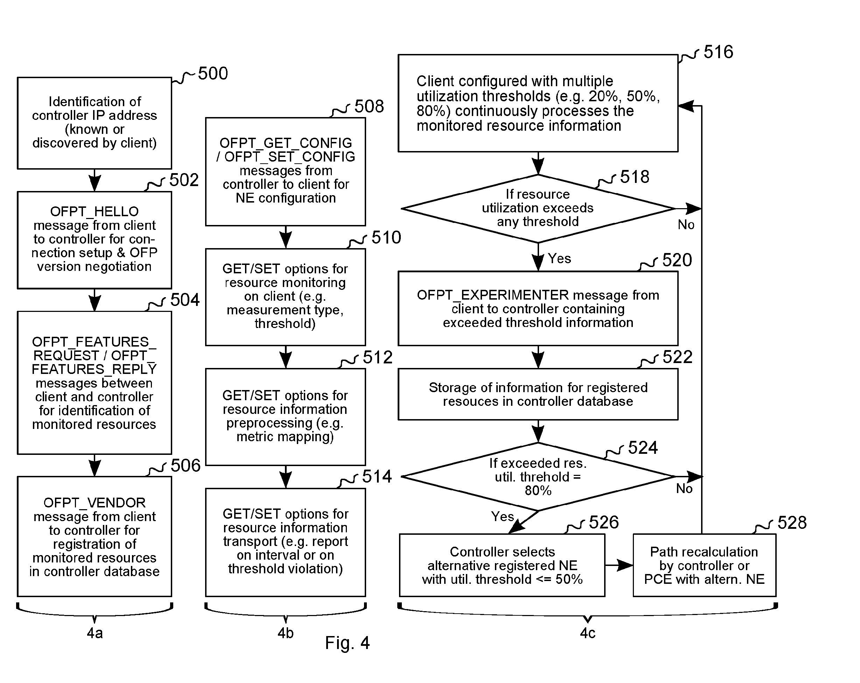

Fig. 4 illustrates block diagrams of flow charts of related processes which may be carried out in an embodiment. Fig. 4 shows on the left hand side a flow chart illustrating the registration process which is also labeled as 4a, the center of Fig. 4 shows the configuration process labeled as 4b, and the right hand side of Fig. 4 shows the resource monitoring and information exchange process labeled as 4c. All these processes are carried out in the client b, i.e. in the data monitoring device 12 as shown in Fig. 3.

In the following the registration process 4a of Fig. 4 will be detailed. If the client 12 knows the IP address of the open flow controller 200, as indicated in step 500 it can initiate an OFP connection and it can use the OFPT_HELLO to negotiate the OFP version. This is indicated by step 502 in Fig. 4. The IP address of the network controller 200 may be known or discovered by the client 12. The OFP_HELLO message is then sent from the client 12 to the controller 200 for a connection setup and OFP version negotiation as indicated in step 502. Future versions of the OFP may include dynamic controller discovery enabling the determination of the open flow controller's IP address at runtime. With this connection established, the controller 200 may request for capabilities, for example, measure, of the resources, of the client 12 by the exchange of OFPT_FEATURES_REQUEST and OFTP_FEATURES_REPLY messages as indicated in step 504 in Fig. 4. In step 504 the monitored resources may be identified.

During the registration process, an OFPT_VENDOR message may be sent in step 506 from the client 12 to the controller 200 for registration of monitored resources in the controller data base. The OFPT_VENDOR message may carry an identification for the network element running the client. This identification together with the feature identifications of the network element's capabilities, as published in the previous step 504, may allow for the construction of a resource information data base in the controller 200. The resource data base may then be used later in the resource monitoring/information exchange process to identify and store the resource information received by the controller 200.

After completion of the registration process 4a, the controller 200 may be enabled to get or set configuration parameters on the client 12 using an OFPT_GET_CONFIG and OFPT_SET_CONFIG messages as indicated in step 508 of the configuration process 4b in Fig. 4. This process may comprise different configuration options as illustrated in Fig. 4. If the client belongs to a regular open flow packet switch, the typical OFTP_FLOW_MOD messages for flow table modification may also be applied. In step 508 the configuration messages are communicated from the controller 200 to the client 12 for the network element configuration. Such messages may comprise information related to the above described measurement configuration. In subsequent step 510 get/set options for resource monitoring on the client 12, for example, the measurement type, and the thresholds may be set at the client. At step 512 the get/set options for the resource information preprocessing, such as the metric mapping to, for example, universal or generic resources, may be configured at the client. Finally in step 514 the get/set options for the resource information transport, such as the reporting interval or event triggered such as threshold violations may be configured.

Finally Fig. 4 shows a flow chart for the monitoring and information exchange process 4c. The resource monitoring and information exchange process 4c is also carried out between the open flow client 12 and its controller 200. In the present embodiment in a first step 516 the client is configured with multiple utilization thresholds, such as 10%, 20%, 50%, 80%, etc. and continuously processes the monitored resource information. These thresholds are examples for multiple resource utilization thresholds. The clients may then continuously process the monitored resource information and inform the controller 200 whenever the resource utilization exceeds one of the defined thresholds. This is indicated by the conditional step 518 in which it is checked whether the resource utilization exceeds any threshold. If none of the thresholds is exceeded the process returns to step 516.

If a threshold is exceeded the client 12 sends an OFPT_EXPERIMENTER message to the controller 200 containing the exceeded threshold information, i.e. the message may contain the violated threshold and the identifications necessary to identify the measured resource. Based on the latter, the controller 200 may store the resource information for registered resources in its data base as indicated in step 522. In other words the exceeded threshold is stored in the controller's data base and the controller 200 may perform additional checks/steps upon the new information. This is indicated in the conditional step 524 in which it is checked whether the resource utilization with the threshold of 80% is exceeded. If the threshold is not exceeded the process returns to step 516. For instance, the controller 200 may check if the resource is utilized by more than 80% as indicated in step 524. If the threshold is exceeded, the controller 200 may react by selecting an alternative registered resource or network element with a utilization threshold of less than 50% in the present embodiment. Moreover, as indicated in step 528, the controller 200 may trigger a path recalculation or a Path Calculation Element (PCE) of an alternative network element.

It is to be noted that the flow diagrams in Fig. 4 merely describe example embodiments. Other embodiments may render such a flow diagram more complex, for instance, threshold undercuts may also be pushed to the controller 200 or the controller 200 may query a client 12 directly. Therefore, the depicted embodiment may not be interpreted in a way to set any boundaries to the flexibility of the proposed SDN enhancement of embodiments.

In general embodiments describe how generic resource information, i.e. information related to resource availability, can be collected and transported to controller 200 in a SDN network environment 300. Embodiments may be applied in all networking scenarios where resource state information impacts network operation.

Among typical use cases there is the use case of a multi-layer network information exchange for IP/optical integration. That is to say the communication network 300 say that the communication network 300 comprises an optical communication layer and an internet protocol layer. The communication network 300 hence comprises an optical communication layer and an internet protocol layer. Accordingly the routing module 24 in the network controller apparatus 20 is operable to determine the information related to the data packet relaying based on information related to resource availability comprising internet protocol traffic flow information and transport resource state information of the optical communication layer. The SDN controller 200 may hence collect information on traffic flows from the IP network and information on transport resource states from the underlying optical network to enable a coordinated operation of both layers.

Another use case of embodiments is application-oriented routing and service placement. Once the resource information reaches the SDN controller 200, it may provide data relevant for application-oriented routing to an ALTO server that supports smart service placement and/or peer selection. However, if an SDN controller comprises routing functionality by itself, it may use the resource information directly to make multi-criteria routing decisions. The implicit requirements of the network and the explicit demands of users, services, and operators can then be processed, i.e. weighted, quantized, categorized, etc., and interpreted into the SDN-control network optimization process, for example, including routing and service placement. To create a centralized cost function, in some embodiments a definition of the objectives may be used which can be composed of one or multiple criteria/metrics and their weights. This may raise complexity and thus scalability issues in a multi-criteria routing algorithm, cf. European Patent Application 811016 EP-EPA on "Path Computation Entity And Method For Computing A Path".

In embodiments to avoid complex multi-criteria optimization processes in the SDN controller 200, the network elements may monitor the resources including mapping functions and tables providing a mapping between the local resource metric, for example, a resource utilization, and a default network metric, such as a universal resource or a link cost. Transporting the translated resource information to the SDN controller 200 for further processing may keep the routing method simple and efficient.

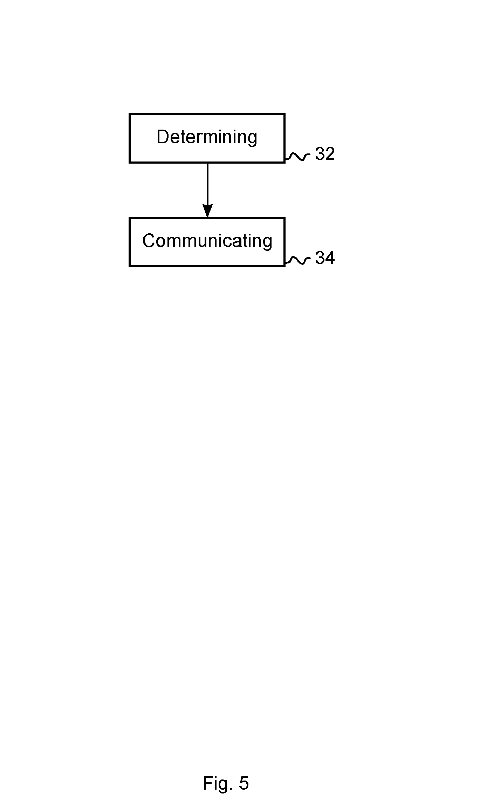

Fig. 5 illustrates a block diagram of a flow chart of an embodiment of a method for a network entity 100 of a communication network 300. The method comprises a step of determining 32 information related to resource availability and a step of communicating 34 the information related to the resource availability to a network controller 200. The step of communicating 34 further comprises receiving information related to a data packet relaying from the network controller 200.

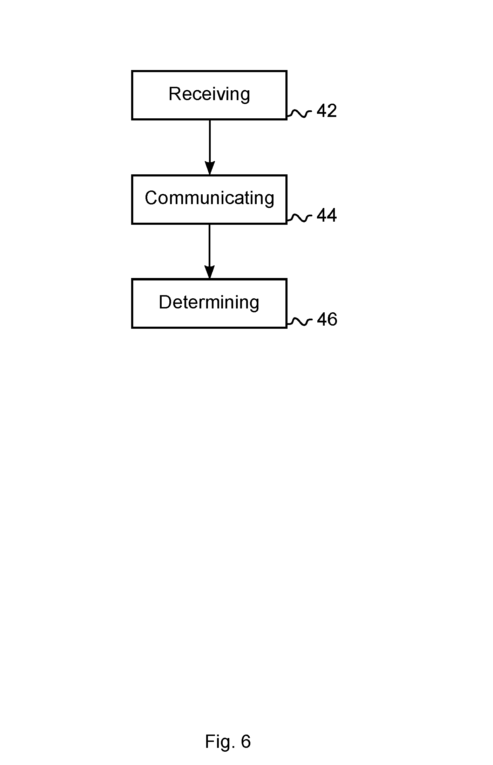

Fig. 6 shows a block diagram of a flow chart of an embodiment of a method for a network controller 200 of the communication network 300. The method comprises a step of receiving 42 information related to a resource availability from a monitoring device 12. The method further comprises a step communicating 44 information related to data packet relaying to a data relay device 14. The method further comprises a step of determining 46 the information related to data packet relaying based on the information related to the resource availability.

Embodiments may further provide a computer readable storage medium storing instructions which, when executed by a computer, cause the computer to implement one of the methods described herein. Embodiments further provide computer programs or computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for monitoring", "means for relaying", "means for communicating", "means for routing", etc., may be provided through the use of dedicated hardware, such as "a monitor", "a relayer", "a communicator", "a router", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. A control system (10) for a network entity (100) of a communication network (300), the control system (10) comprising:
a monitoring device (12) operable to determine information related to a resource availability associated with the network entity (100) and operable to communicate the information related to the resource availability to a network controller (200); and
a data relay device (14) operable to relay data packets between a plurality of network nodes (100), wherein the data relay device (14) is operable to receive information related to data packet relaying for the network entity (100) from the network controller (200).

2. The apparatus (10) of claim 1, wherein the data relay device (14) comprises a plurality of interface modules and wherein the information related to data packet relaying comprises information on a mutual assignment of at least a subset of the plurality of interface modules based on address information of a data packet.

3. The apparatus (10) of claim 1, wherein the monitoring device (12) is operable to use open flow protocol, hypertext transfer protocol, representational state transfer, simple object access protocol, or remote procedure call to communicate with the network controller (200).

4. The apparatus (10) of claim 1, wherein the information related to the resource availability corresponds to one or more elements of the group of a utilization of processing units, an energy consumption, resource state information, a resource utilization or an energy availability, and/or wherein the communication network (300) comprises an optical communication layer and an Internet Protocol layer.

5. The apparatus (10) of claim 1, wherein the monitoring device (12) is operable to receive information related to a measurement configuration from the network controller (200), wherein the information related to the measurement configuration comprises information related to a resource measurement to obtain the information related to the resource availability.

6. The apparatus (10) of claim 5, wherein the information related to the measurement configuration further comprises information related to a reporting cycle or a reporting event in order to trigger a communication of the information related to the resource availability to the network controller (200).

7. An apparatus (20) for a network controller (200) of a communication network (300), the apparatus (20) comprising
one or more communication interfaces (22) operable to receive information related to a resource availability from a monitoring device (12), and wherein the one or more communication interfaces (22) are further operable to communicate information related to data packet relaying to a data relay device (14); and
a routing module (24) operable to determine the information related to data packet relaying based on the information related to the resource availability.

8. The apparatus (20) of claim 7, wherein the one or more communication interfaces (22) use open flow protocol, hypertext transfer protocol, representational state transfer, simple object access protocol, or remote procedure call to communicate with the monitoring device (12) and/or wherein the information related to the resource availability corresponds to one or more elements of the group of a utilization of processing units, an energy consumption, resource state information, a resource utilization or an energy availability.

9. The apparatus (20) of claim 7, wherein the communication network (300) comprises an optical communication layer and an Internet Protocol layer and wherein the routing module (24) is operable to determine the information related to data packet relaying based on information related to resource availability comprising Internet Protocol traffic flow information and transport resource state information of the optical communication layer.

10. The apparatus (20) of claim 7, wherein the routing module (24) is operable to further determine information related to a measurement configuration, wherein the information related to the measurement configuration comprises information related to a resource availability measurement to obtain the information related to the resource availability, and wherein the one or more communication interfaces (22) are operable to communicate the information related to the measurement configuration to the monitoring device (12), and/or wherein the one or more communication interfaces (22) are operable to provide information related to the resource availability to an application entity (400) or application-layer traffic optimization entity (410).

11. The apparatus (20) of claim 10, wherein the information related to the measurement configuration further comprises information related to a reporting cycle or a reporting event in order to trigger a communication of the information related to the resource availability from the monitoring device (12) to the apparatus (20).

12. The apparatus (20) of claim 7, wherein the routing module (24) is operable to determine information related to routing tables referring to a plurality of data relaying devices (14) based on information related to resource availability from a plurality of monitoring devices (12), wherein the one or more communication interfaces (22) are operable to communicate the information related to routing tables to the plurality of data relaying devices (14) as information related to data packet relaying, and wherein the routing module (24) is operable to re-determine information related to routing tables if the information related to the resource availability of one or more of the plurality of monitoring devices (12) indicate a resource availability violating or exceeding a defined/configured resource availability limit.

13. A method for a network entity (100) of a communication network (300), the method comprising:
determining (32) information related to a resource availability; and
communicating (34) the information related to the resource availability to a network controller (200), wherein the communicating (34) further comprises receiving information related to data packet relaying from the network controller (200).

14. A method for a network controller (200) of a communication network (300), the method comprising:
receiving (42) information related to a resource availability from a monitoring device (12);
communicating (44) information related to data packet relaying to a data relay device (14); and
determining (46) the information related to data packet relaying based on the information related to the resource availability.

15. A computer readable storage medium storing instructions which, when executed by a computer, cause the computer to implement one of the methods of claims 13 or 14.

## Amended claims

### Amended claims in accordance with Rule 137(2) EPC.

**1.** A control system (10) for a network entity (100) of a communication network (300), the control system (10) comprising:
a monitoring device (12) operable to determine information related to a resource availability associated with the network entity (100) and operable to communicate the information related to the resource availability to a network controller (200); and
a data relay device (14) operable to relay data packets between a plurality of network entities (100; 100a; 100b; 100c), wherein the data relay device (14) is operable to receive information related to data packet relaying for the network entity (100) from the network controller (200).

**2.** The control system (10) of claim 1, wherein the data relay device (14) comprises a plurality of interface modules and wherein the information related to data packet relaying comprises information on a mutual assignment of at least a subset of the plurality of interface modules based on address information of a data packet.

**3.** The control system (10) of claim 1, wherein the monitoring device (12) is operable to use open flow protocol, hypertext transfer protocol, representational state transfer, simple object access protocol, or remote procedure call to communicate with the network controller (200).

**4.** The control system (10) of claim 1, wherein the information related to the resource availability corresponds to one or more elements of the group of a utilization of processing units, an energy consumption, resource state information, a resource utilization or an energy availability, and/or wherein the communication network (300) comprises an optical communication layer and an Internet Protocol layer.

**5.** The control system (10) of claim 1, wherein the monitoring device (12) is operable to receive information related to a measurement configuration from the network controller (200), wherein the information related to the measurement configuration comprises information related to a resource measurement to obtain the information related to the resource availability.

**6.** The control system (10) of claim 5, wherein the information related to the measurement configuration further comprises information related to a reporting cycle or a reporting event in order to trigger a communication of the information related to the resource availability to the network controller (200).

**7.** An apparatus (20) for a network controller (200) of a communication network (300), the apparatus (20) comprising
one or more communication interfaces (22) operable to receive information related to a resource availability from a monitoring device (12), and wherein the one or
more communication interfaces (22) are further operable to communicate information related to data packet relaying to a data relay device (14); and
a routing module (24) operable to determine the information related to data packet relaying based on the information related to the resource availability.

**8.** The apparatus (20) of claim 7, wherein the one or more communication interfaces (22) use open flow protocol, hypertext transfer protocol, representational state transfer, simple object access protocol, or remote procedure call to communicate with the monitoring device (12) and/or wherein the information related to the resource availability corresponds to one or more elements of the group of a utilization of processing units, an energy consumption, resource state information, a resource utilization or an energy availability.

**9.** The apparatus (20) of claim 7, wherein the communication network (300) comprises an optical communication layer and an Internet Protocol layer and wherein the routing module (24) is operable to determine the information related to data packet relaying based on information related to resource availability comprising Internet Protocol traffic flow information and transport resource state information of the optical communication layer.

**10.** The apparatus (20) of claim 7, wherein the routing module (24) is operable to further determine information related to a measurement configuration, wherein the information related to the measurement configuration comprises information related to a resource availability measurement to obtain the information related to the resource availability, and wherein the one or more communication interfaces (22) are operable to communicate the information related to the measurement configuration to the monitoring device (12), and/or wherein the one or more communication interfaces (22) are operable to provide information related to the resource availability to an application entity (400) or application-layer traffic optimization entity (410).

**11.** The apparatus (20) of claim 10, wherein the information related to the measurement configuration further comprises information related to a reporting cycle or a reporting event in order to trigger a communication of the information related to the resource availability from the monitoring device (12) to the apparatus (20).

**12.** The apparatus (20) of claim 7, wherein the routing module (24) is operable to determine information related to routing tables referring to a plurality of data relaying devices (14) based on information related to resource availability from a plurality of monitoring devices (12), wherein the one or more communication interfaces (22) are operable to communicate the information related to routing tables to the plurality of data relaying devices (14) as information related to data packet relaying, and wherein the routing module (24) is operable to re-determine information related to routing tables if the information related to the resource availability of one or more of the plurality of monitoring devices (12) indicate a resource availability violating or exceeding a defined/configured resource availability limit.

**13.** A method for a network entity (100) of a communication network (300), the method comprising:
determining (32) information related to a resource availability; and
communicating (34) the information related to the resource availability to a network controller (200), wherein the communicating (34) further comprises receiving information related to data packet relaying from the network controller (200).

**14.** A method for a network controller (200) of a communication network (300), the method comprising:
receiving (42) information related to a resource availability from a monitoring device (12);
communicating (44) information related to data packet relaying to a data relay device (14); and
determining (46) the information related to data packet relaying based on the information related to the resource availability.

**15.** A computer readable storage medium storing instructions which, when executed by a computer, cause the computer to implement one of the methods of claims 13 or 14.
